# EUROPEAN PATENT APPLICATION

(11) **EP 4 578 673 A1**
(43) Date of publication of application: **02.07.2025**
(21) Application number: 23856342.3
(22) Date of filing: 12.07.2023
(51) Int. Cl.: B60C 23/04

(54) **HOST-VEHICLE TIRE IDENTIFICATION METHOD AND IDENTIFICATION APPARATUS THEREFOR, AND ANTENNA-BASED HOST-VEHICLE TIRE IDENTIFICATION METHOD**

(30) Priority: 23.08.2022 CN 202211012054
(71) Applicant: Baolong Huf Shanghai Electronic Co., Ltd., Shanghai 201619 (CN)
(72) Inventor: WANG, Xu, Shanghai 201619 (CN); SHI, Weihua, Shanghai 201619 (CN); AN, Quanshe, Shanghai 201619 (CN)
(74) Representative: Grünecker Patent- und Rechtsanwälte PartG mbB
(86) International application number: PCT/CN2023/106873
(87) International publication number: WO 2024/041252

(57) **Abstract**

The present invention relates to a host-vehicle tire identification method and an identification apparatus therefor, and an antenna-based host-vehicle tire identification method. The host-vehicle tire identification method comprises: S1, identification of an identification number; S2, judgement of the identification number; S3, weighting calculation; and S4, identification of a tire of a host vehicle. Disclosed in the present invention are the host-vehicle tire identification method and the identification apparatus therefor, and the antenna-based host-vehicle tire identification method, which can quickly determine whether a tire corresponding to an identification number is a tire belonging to a host vehicle.

## Description

### Technical Field

The present application mainly relates to the technical fields of vehicle tire positioning, and in particular to a host-vehicle tire identification method and an identification apparatus therefor, and an antenna-based host-vehicle tire identification method.

### Background

The tire condition monitoring system is a safety system that ensures the smooth operation of the host-vehicle. As a regulatory requirement, the tire condition monitoring system has developed rapidly in the automotive market in recent years. Since it can monitor the operating conditions of automobile tires in real time, it can issue a warning to the driver in time when the tire has abnormal conditions such as air leakage or excessive temperature, thus avoiding tire damage to the greatest extent and providing a good guarantee for the safe operation of the host-vehicle. As an active safety system of the car, the tire condition monitoring system can not only prevent the host-vehicle from tire blowout and avoid accidents, but also inflating the tire to the recommended standard pressure value to reduce the host-vehicle's fuel consumption and making the tire last longer.

Usually, in order to accurately monitor the status of each tire, when the air pressure or temperature of a tire is abnormal, its specific position can be correctly displayed. Generally, the tire positions of a small vehicle include the front left FL, the front right FR, the rear right RR, and the rear left RL. After installing a tire condition monitoring system, people will first determine the installation location of the tire pressure detection device. This process of identifying the location of the tire condition detection device is usually called "tire condition monitoring system tire position learning". Tire position learning in the tire condition monitoring system is divided into passive learning and active learning. The tire position learning achieved through special diagnostic instruments and other tools is called passive learning, and the tire position learning completed by the tire condition monitoring system using the existing devices on the host-vehicle without the help of additional auxiliary equipment is called "active learning of the tire condition monitoring system". Compared to passive learning, which requires professionals to learn the ID through dedicated diagnostic tools, active learning can save installation time and can complete autonomous learning of tire position without the need for professional after-sales personnel and dedicated diagnostic instruments.

During the process of autonomous tire position learning, it is possible to learn the tire condition monitoring devices on other vehicles. How to quickly identify the tires of host-vehicle through tire sensors is a very important step in the process of autonomous tire position learning, and doing so can use less hardware resources to achieve the function of active learning.

### Summary

The technical problem to be solved by the present invention is to provide a host-vehicle tire identification method and an identification apparatus therefor, and an antenna-based host-vehicle tire identification method, which can quickly determine whether the tire belongs to host-vehicle.

Specifically, the present application provides a host-vehicle tire identification method that is applicable to a vehicle, which comprises steps:
S1: identification of an identification number, receiving a data packet sent by a tire condition detection device of a vehicle and obtaining the identification number corresponding to the tire condition detection device in the data packet;
S2: judgement of the identification number, determining whether the identification number is a historical identification number, the historical identification number representing the identification number of all tires of the host-vehicle that have been obtained during history process, if the identification number is not historical identification number, determining this identification number as a temporary identification number;
S3: weighting calculation, if the identification number is historical identification number, a weighting of the identification number accumulating in sequence according to a first type of weight increment; if the identification number is temporary identification number, the weighting of the identification number accumulating in sequence according to the second type of weight increment, wherein the first type of weight increment is not less than the second type of weight increment;
S4: identification of a tire of a host-vehicle, determining whether the weighting of the identification number meets a preset condition, if not, returning to step **S1, if** yes, identifying the tire corresponding to the identification number that meets the preset condition belongs to host-vehicle.

According to one embodiment of the present invention, the historical identification number has a first basic weighting, and the temporary identification number has a second basic weighting, wherein the first basic weighting is not greater than the second basic weighting;
Weighting calculation in step S3 comprising: if the identification number is a historical identification number, the identification number regarding the first basic weighting of the historical identification number as its initial weighting and accumulating weighting in sequence according to the first type of weight increment; if the identification number is a temporary identification number, the identification number regarding the second basic weighting as its initial weighting and accumulating weighting in sequence according to the second type of weight increment.

According to one embodiment of the present invention, if only data packet sent by single tire condition detection device of the host-vehicle is received in step S1, then a preset condition is determining whether the weighting of the identification number is greater than a first set threshold value in step S4, if not, returning to step S1, if yes, identifying the tire corresponding to the identification number belongs to host-vehicle;

If data packets sent by all the tire condition detection devices of the host-vehicle are received in step S1, then a preset condition is determining whether there are N1 identification numbers among all the identification numbers whose weightings are greater than a second set threshold value in step S4, if not, returning to step S1, if yes, identifying the tires corresponding to the N1 identification numbers belong to the host-vehicle, where N1 is the number of tires of the host-vehicle.

According to one embodiment of the present invention, a vehicle includes a historical identification number list for storing historical identification numbers and a temporary identification number list for storing temporary identification numbers;
Identifying the identification number in step S1 comprising: receiving data packet sent by tire condition detection device of the host-vehicle and obtaining the identification number corresponding to every tire condition detection device in the data packet;
Judgement of the identification number in step S2 comprising: determining whether the identification number matches the historical identification number in the historical identification number list or the temporary identification number in the temporary identification number list, and if not, storing the identification number in the temporary identification number list;
Weighting calculation in step S3 comprising: if the identification number is historical identification number, the weighting of the identification number accumulating in sequence according to the first type of weight increment; if the identification number is a temporary identification number, the weighting of the identification number accumulating in sequence according to the second type of weight increment;
Identification of a tire of a host-vehicle in step S4 comprising: determining whether the identification numbers in the historical identification number list and the temporary identification number list meet the preset condition, if not, returning to step S1, if yes, identifying the tire corresponding to the identification number that meets the preset condition belongs to host-vehicle.

The present invention also provides an antenna-based host-vehicle tire identification method, which is applicable of vehicle, the host-vehicle providing an antenna group, and the antenna group includes at least two antennas, and the identification method comprises steps:
T1, identifying the identification number, each antenna in the antenna group receiving a data packet sent by a tire condition detection device of a vehicle and obtaining the identification number corresponding to the tire condition detection device in the data packet;
T2, judgement of the identification number, determining whether the identification number is a historical identification number, the historical identification number representing the identification number of all tires of the host-vehicle that have been obtained during history process, if the identification number is not historical identification number, determining this identification number as a temporary identification number;
T3, weighting calculation, calculating the weighting of the identification number in the antenna based on the antenna that receives the identification number, if the identification number is historical identification number, a weighting of the identification number accumulating in sequence according to a first type of weight increment; if the identification number is temporary identification number, the weighting of the identification number accumulating in sequence according to a second type of weight increment, wherein the first type of weight increment is not less than the second type of weight increment;
T4, comprehensive weighting calculation, calculating a comprehensive weighting of the identification number in the antenna group based on the weighting of the identification number in each antenna;
T5, identification of a tire of a host-vehicle, determining whether the comprehensive weighting of the identification number meets a preset condition, if not, returning to step T1, if yes, identifying the tire corresponding to the identification number that meets the preset condition belongs to host-vehicle.

According to one embodiment of the present invention, in step T4, considering the maximum weighting of the identification number among all antennas as the comprehensive weighting of the identification number in the antenna group.

According to one embodiment of the present invention, before step T4, obtaining a packet sequence number and/or a timestamp of each data packet received by each antenna, and in step S4, merging the packet sequence numbers and/or timestamps of the same identification number in all antennas, and the number of corresponding data packets after merging is multiplied by the first type weight increment or the second type weight increment corresponding to the identification number, and the calculation result is used as the comprehensive weighting of the identification number in the antenna group.

According to one embodiment of the present invention, the historical identification number has a first basic weighting, and the temporary identification number has a second basic weighting, wherein the first basic weighting is not greater than the second basic weighting, determining the comprehensive weighting of the historical identification number based on the first basic weighting and the first type of weight increment; determining the comprehensive weighting of the temporary identification number based on the second basic weighting and the second type of weight increment.

According to one embodiment of the present invention, a vehicle includes a historical identification number list for storing historical identification numbers and a temporary identification number list for storing temporary identification numbers;
Identifying the identification number in step T1 comprising: each antenna in the antenna group receiving a data packet sent by a tire condition detection device of a vehicle and obtaining the identification number corresponding to the tire condition detection device in the data packet;
Judgement of the identification number in step T2 comprising: determining whether the identification number matches the historical identification number in the historical identification number list or the temporary identification number in the temporary identification number list, and if not, storing the identification number in the temporary identification number list;
Weighting calculation in step T3 comprising: calculating the weighting of the identification number in the antenna based on the antenna that receives the identification number, if the identification number is historical identification number, the weighting of the identification number accumulating in sequence according to the first type of weight increment; if the identification number is a temporary identification number, the weighting of the identification number accumulating in sequence according to the second type of weight increment;

Comprehensive weighting calculation in T4 comprising: calculating the comprehensive weighting of the identification number in the antenna group based on the weighting of each antenna of the identification number in the historical identification number list and the temporary identification number list.

Identification of a tire of a host-vehicle in step T5 comprising: determining whether the comprehensive weighting of the identification number meets a preset condition, if not, returning to step T1, if yes, identifying the tire corresponding to the identification number that meets the preset condition belongs to host-vehicle.

According to one embodiment of the present invention, if only data packet sent by single tire condition detection device of the host-vehicle is received in step T1, then a preset condition is determining whether the comprehensive weighting is greater than a third set threshold value in step T5, if not, returning to step S1, if yes, identifying the tire corresponding to the identification number belongs to host-vehicle;
If data packets sent by all the tire condition detection devices of the host-vehicle are received in step T1, then a preset condition is determining whether there are N2 comprehensive weighting among all the identification numbers whose weightings are greater than a forth set threshold value in step T5, if not, returning to step T1, if yes, identifying the tires corresponding to the N2 identification numbers belong to the host-vehicle, where N2 is the number of tires of the host-vehicle.

The present invention also provides a host-vehicle tire identification apparatus, that is use to implement the above-mentioned host-vehicle tire identification method, characterized by comprising:
Identifying identification number unit, which is used to receive a data packet sent by a tire condition detection device of a vehicle and obtaining the identification number corresponding to the tire condition detection device in the data packet;
Determining identification number unit, which is used to determine whether the identification number is a historical identification number, the historical identification number representing the identification number of all tires of the host-vehicle that have been obtained during history process;
Weighting calculation unit, calculating the weighting of the identification number based on the identification result of the determining identification number unit, if the identification number is historical identification number, a weighting of the identification number accumulating in sequence according to a first type of weight increment; if the identification number is temporary identification number, the weighting of the identification number accumulating in sequence according to a second type of weight increment, wherein the first type of weight increment is not less than the second type of weight increment;
Identifying unit, which is used to determine whether the weighting of the identification number meets a preset condition, if yes, identifying the tire corresponding to the identification number belongs to host-vehicle.

The present invention also provides a host-vehicle tire identification device, comprising a memory, a processor and a computer program stored in the memory and executable on the processor, characterized in that, the processor implements the steps of host-vehicle tire identification method based on an antenna as stated above when executing the computer program.

The present invention also provides a computer-readable storage medium having a computer program stored thereon, characterized in that, when the computer program is executed by a processor, the steps of the host-vehicle tire identification method based on an antenna as stated above are implemented.

The present invention provides the host-vehicle tire identification method and an identification apparatus therefor, and an antenna-based host-vehicle tire identification method, identification device and computer-readable storage medium, which determine whether the tire corresponding to the identification number belongs to host-vehicle through calculating the weighting of each tire's identification number.

It is to be understood that both the foregoing general description and the following detailed description of the present invention are exemplary and explanatory and are intended to provide further explanation of the invention as claimed.

### Brief Description of the Drawings

The drawings are included to provide a further understanding of the present application, and they are included and constitute a part of the present application, the drawings show the embodiments of the present application, and serving to explain the principles of the present application together with the description. In the drawings:
Fig.1 shows a flowchart of a host-vehicle tire identification method according to an embodiment of the present invention.
Fig.2 shows a flowchart of an antenna-based host-vehicle tire identification method according to an embodiment of the present invention.
Fig.3 shows a schematic diagram of a structure of a host-vehicle tire identification apparatus of a host-vehicle tire identification method according to an embodiment of the present invention.

### Preferred Embodiment of the Present Invention

It should be noted that, in the absence of conflict, the embodiments and features in the embodiments of this application can be combined with each other.

The technical solutions in the embodiments of the present application will be clearly and completely described below in conjunction with the drawings in the embodiments of the present application. Obviously, the described embodiments are parts of the embodiments of this application, but not all of them. Based on the embodiments in the present application, all other embodiments obtained by persons of ordinary skill in the art without making creative efforts belong to the protection scope of the present application.

It should be noted that the terms used herein are only for describing specific embodiments and are not intended to limit the exemplary embodiments according to the present application. As indicated in this application and claims, the terms "a", "an", "a kind of" and/or "the" do not specifically refer to the singular and may include the plural unless the context clearly indicates an exception. Generally speaking, the terms "comprising" and "including" only suggest the inclusion of clearly identified steps and elements, and these steps and elements do not constitute an exclusive list, and the method or device may also contain other steps or elements.

The relative arrangements of components and steps, numerical expressions and numerical values set forth in these embodiments do not limit the scope of the present application unless specifically stated otherwise. At the same time, it should be understood that, for the convenience of description, the sizes of the various parts shown in the drawings are not drawn according to the actual proportional relationship. Techniques, methods and devices known to those of ordinary skill in the relevant art may not be discussed in detail, but where appropriate, such techniques, methods and devices should be considered part of the authorized specification. In all embodiments shown and discussed herein, any specific values should be construed as illustrative only, and not as limiting. Therefore, other examples of the exemplary embodiment may have different values. It should be noted that like numerals and letters denote like items in the following figures, therefore, once an item is defined in one figure, it does not require further discussion in subsequent drawings.

In the description of the present application, it should be understood that orientation words such as "front, back, up, down, left, right", " landscape, portrait, vertical, horizontal" and "top, bottom" etc. indicating the orientation or positional relationship is generally based on the orientation or positional relationship shown in the drawings, only for the convenience of describing the application and simplifying the description, in the absence of a contrary statement, these orientation words do not indicate or imply that the device or element referred to must have a specific orientation or be constructed and operated in a specific orientation, and therefore cannot be construed as limiting the scope of protection of this application; the orientation words "inside and outside" refer to inside and outside relative to the outline of each part itself.

In addition, it should be noted that the use of words such as "first" and "second" to define components is only for the convenience of distinguishing corresponding components, unless otherwise stated, the above words have no special meanings, and therefore cannot be construed as limiting the protection scope of the present application. In addition, although the terms used in this application are selected from well-known and commonly used terms, some terms mentioned in the specification of this application may be selected by the applicant according to his or her judgment, and their detailed meanings are listed in this article described in the relevant section of the description. Furthermore, it is required that this application be understood not only by the actual terms used, but also by the meaning implied by each term.

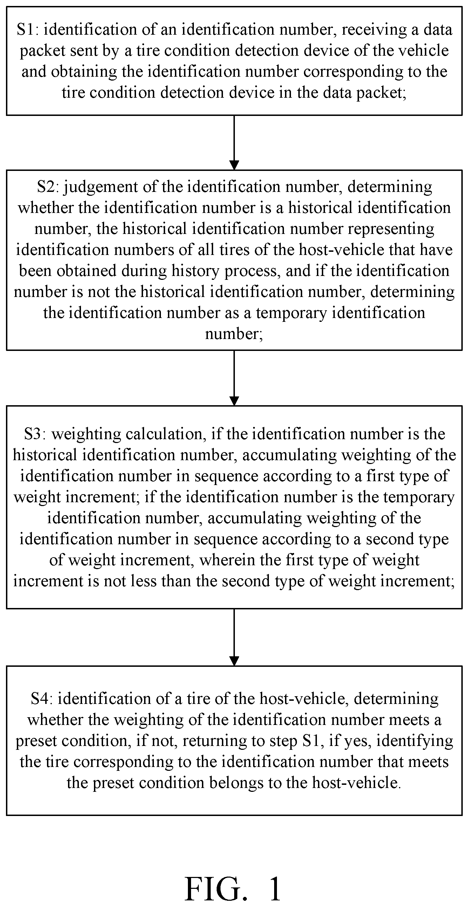

Fig. 1 shows flowchart of a host-vehicle tire identification method according to an embodiment of the present invention. As shown in the figure, the present application provides a host-vehicle tire identification method. The identification method comprises steps:
S1: identification of an identification number, receiving a data packet sent by a tire condition detection device of a vehicle and obtaining the identification number corresponding to the tire condition detection device in the data packet. Specifically, a tire condition detection device is provided on each tire of the host-vehicle, and each tire condition detection device is used to monitor the pressure, temperature and other conditions of the corresponding tire. The data packet sent by the tire condition detection device contains the identification number of the corresponding tire. The identification number can be a serial number of the tire condition detection device, which is unique, so that the identification number can correspond to the tire one by one.
S2: judgement of the identification number, determining whether the identification number is a historical identification number, the historical identification number representing the identification number of all tires of the host-vehicle that have been obtained during history process, if the identification number is not the historical identification number, determining the identification number as a temporary identification number. Taking a small vehicle as an example, it is usually equipped with 4 tires. The identification numbers of the 4 tires of the host-vehicle have been obtained in its historical process, and these 4 identification numbers are used as 4 historical identification numbers. It is easy to understand that due to the existence of tire replacement and other situations, these historical identification numbers are not necessarily identified as the identification numbers corresponding to the tires of the host-vehicle in the subsequent identification process.
S3: weighting calculation, if the identification number is the historical identification number, accumulating weighting of the identification number in sequence according to a first type of weight increment; if the identification number is the temporary identification number, accumulating weighting of the identification number in sequence according to a second type of weight increment, wherein the first type of weight increment is not less than the second type of weight increment. In this step, different weight increments are configured for the historical identification number and the temporary identification number, so that during the weighting calculation process, after accumulating single or several weight increments, there will be a large difference in the weightings of the historical identification number and the temporary identification number, which is conducive to the subsequent rapid judgment of the host-vehicle tire.
S4: identification of a tire of the host-vehicle, determining whether the weighting of the identification number meets a preset condition, if not, returning to step **S1,** if yes, identifying the tire corresponding to the identification number that meets the preset condition belongs to the host-vehicle.

The present invention provides a host-vehicle tire identification method, if the identification number is a historical identification number, setting a larger weight increment for the tire, if the identification number is a temporary identification number, setting a smaller weight increment for the tire, calculating the weighting of each tire identification number by using a weighting incremental accumulation method, that is, "weighting = number of data packets * weight increment" in step 3, after receiving several data packets of the historical identification number (for example, receiving the first data packet), based on the difference between the two types of weight increments and by setting the preset conditions for the weighting of the identification number, the tires of host-vehicle and those of other vehicles can be quickly distinguished and identified.

Preferably, the historical identification number has a first basic weighting, and the temporary identification number has a second basic weighting, wherein the first basic weighting is not greater than the second basic weighting.

Weighting calculation in step S3 comprises: if the identification number is a historical identification number, the identification number is using the first basic weighting of the historical identification number as its initial weighting and accumulating in sequence according to the first type of weight increment; if the identification number is a temporary identification number, the identification number is using the second basic weighting as its initial weighting and accumulating in sequence according to the second type of weight increment, that is, "weighting = number of data packets * weight increment" in step 3.

The purpose of setting the first basic weighting not greater than the second basic weighting is to consider that the tire corresponding to the historical identification number is usually more likely to be identified as a tire belonging to the host-vehicle, and thus a smaller basic weighting is given. When calculating the weighting of each identification number by the weighting increment accumulation method, due to the affection by the basic weighting, the weighting of the temporary identification number can approach the preset condition more quickly after receiving data packets in limited number of times, which is conducive to quickly identifying the tire belonging to the host-vehicle through the temporary identification number.

In addition, in this embodiment, each data packet includes N repeated data frames, when calculating the weighting, the total number of received data packets can be used as the calculation basis, that is, "weighting = basic weighting + number of data packets * weight increment"; or all received data frames can be used as the calculation basis, that is, "weighting = basic weighting + N * number of data packets * weight increment". Wherein, if the basic weight is not set, it can be deleted accordingly.

Preferably, if only data packet sent by single tire condition detection device of the host-vehicle is received in step S1, then a preset condition is determining whether the weighting of the identification number is greater than a first set threshold value in step S4, if not, returning to step S1, if yes, identifying the tire corresponding to the identification number belongs to host-vehicle.

For example, assuming that the first type of weight increment is 10, the second type of weight increment is 5, the first basic weighting is 1, the second basic weighting is 2, and the first set threshold value is 10. If the identification number in the received data packet is a historical identification number, then the weighting of the identification number calculated in step S3 is 1 (the first basic weighting is 1) + 10 (the first type of weight increment) equals 11, which is greater than 10 (the first set threshold value), and it is determined that the tire corresponding to the identification number belongs to host-vehicle. If there are tire replacement situations, the identification number in the received data packet is a temporary identification number, and the two data packets received afterwards also contain the temporary identification number, then the weighting of the identification number is calculating as 2 (the second basic weighting is 2) + 2*5 (the second type of weight increment) equals 12, which is greater than 10 (the first set threshold value), and it is determined that the tire corresponding to the identification number belongs to host-vehicle. Obviously, by setting the weight increment and the basic weighting, the weighting of the historical identification number and the temporary identification number can meet the preset conditions more quickly based on fewer received data packets, which is conducive to quickly identifying the tire belonging to host-vehicle.

If data packets sent by all the tire condition detection devices of the host-vehicle are received in step S1, then a preset condition is determining whether there are N1 identification numbers among all the identification numbers whose weightings are greater than a second set threshold value in step S4, if not, returning to step **S1, if** yes, identifying the tires corresponding to the N1 identification numbers belong to the host-vehicle, where N1 is the number of tires of the host-vehicle.

Taking a small vehicle as an example, N1 takes a value of 4, and setting the second set threshold value as 10. When there are 4 identification numbers with weighting greater than 10 among the historical identification numbers and temporary identification numbers, the tires corresponding to these 4 identification numbers belong to host-vehicle, and terminating the current identification. If only 3 or fewer identification numbers meet the requirements, then returning to step S1, and repeating steps S1 to S4 until 4 identification numbers with weighting greater than 10 are found.

Preferably, in step S4, if it is identified that the tires corresponding to the N1 identification numbers belong to host-vehicle, the historical identification number list is updated with the N1 identification numbers. Further, using the first basic weighting as the initial weighting of the N1 identification numbers, and clearing the temporary identification number list.

Preferably, a vehicle includes a historical identification number list for storing historical identification numbers and a temporary identification number list for storing temporary identification numbers, the historical identification number list can be understood as a variable array containing all historical identification numbers, and the temporary identification number list can be understood as another variable array containing all temporary identification numbers, so as to facilitate corresponding processing of the identification numbers therein;
Identifying the identification number in step S1 comprising: receiving data packet sent by tire condition detection device of the host-vehicle and obtaining the identification number corresponding to every tire condition detection device in the data packet;
Judgement of the identification number in step S2 comprising: determining whether the identification number matches a historical identification number in the historical identification number list or a temporary identification number in the temporary identification number list, matching here means that the identification number is the same as a historical identification number or a temporary identification number; due to the identification number is unique, it is impossible for an identification number to match a historical identification number and a temporary identification number at the same time. If there is no match, storing the identification number as a newly added temporary identification number in the temporary identification number list.

Weighting calculation in step S3 comprising: if the identification number matches the historical identification number, the weighting of the identification number accumulating in sequence according to the first type of weight increment; if the identification number matches the temporary identification number, the weighting of the identification number accumulating in sequence according to the second type of weight increment; It is easy to understand that in the next identification number identification, if the obtained identification number matches the aforementioned newly added temporary identification number, accumulating the weighting of the identification number in sequence according to the second type of weight increment.

Identification of a tire of a host-vehicle in step S4 comprising: determining whether the identification numbers in the historical identification number list and the temporary identification number list meet the preset condition, if not, returning to step S1, if yes, identifying the tire corresponding to the identification number that meets the preset condition belongs to host-vehicle.

It should be noted that the first type of weight increment and the second type of weight increment can be constants. For example, the first type of weight increment is 10, and the second type of weight increment is 5. Each time the weighting of the identification number is calculated, the first type of weight increment and the second type of weight increment remain unchanged. The first type of weight increment is not less than the second type of weight increment and can also be an increasing series that changes with time. For example, when calculating the weighting of the identification number for the first time, the first type of weight increment is 10, and the second type of weight increment is 5; when calculating the weighting of the identification number for the second time, the first type of weight increment is 15, and the second type of weight increment is 8; and so on, the weight increment gradually increases with time.

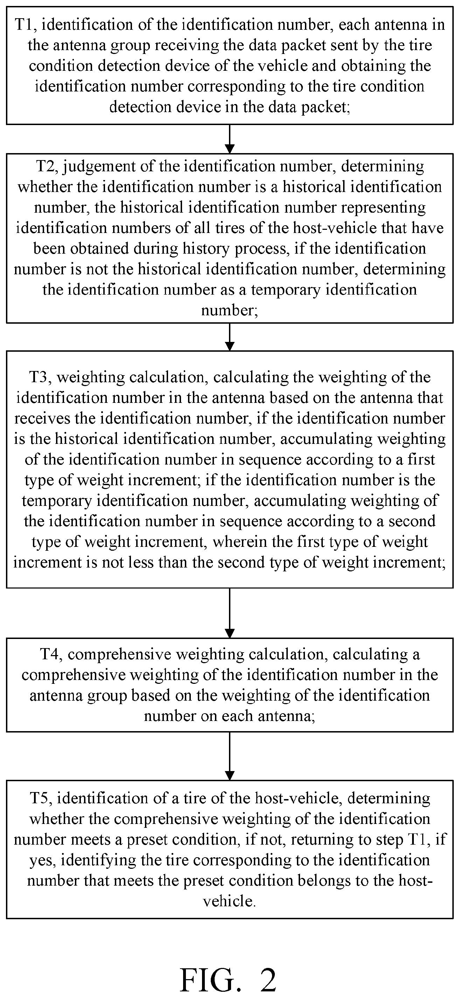

In fact, for small vehicles, since the distance between tires is relatively close, only a single antenna on the host-vehicle can fully receive the data packets transmitted by all tires. However, for large vehicles, a single antenna cannot guarantee to receive the data packets sent by all tires. Therefore, the present invention also provides an antenna-based host-vehicle tire identification method. Fig. 2 shows a flowchart of an antenna-based host-vehicle tire identification method according to an embodiment of the present invention. Referring to Fig. 2, an antenna-based host-vehicle tire identification method is applicable for a vehicle, the vehicle providing with an antenna group, and the antenna group includes at least two antennas, and the identification method comprises:
T1, identification of the identification number, each antenna in the antenna group receiving the data packet sent by the tire condition detection device of the vehicle and obtaining the identification number corresponding to the tire condition detection device in the data packet;
T2, judgement of the identification number, determining whether the identification number is a historical identification number, the historical identification number representing identification numbers of all tires of the host-vehicle that have been obtained during history process, if the identification number is not the historical identification number, determining the identification number as a temporary identification number;
T3, weighting calculation, calculating the weighting of the identification number in the antenna based on the antenna that receives the identification number, if the identification number is the historical identification number, accumulating weighting of the identification number in sequence according to a first type of weight increment; if the identification number is the temporary identification number, accumulating weighting of the identification number in sequence according to a second type of weight increment, wherein the first type of weight increment is not less than the second type of weight increment;
T4, comprehensive weighting calculation, calculating a comprehensive weighting of the identification number in the antenna group based on the weighting of the identification number on each antenna;
T5, identification of a tire of the host-vehicle, determining whether the comprehensive weighting of the identification number meets a preset condition, if not, returning to step T1, if yes, identifying the tire corresponding to the identification number that meets the preset condition belongs to the host-vehicle.

The identification method uses a weight incremental accumulation method to calculate the weighting of each identification number in the antenna group, and by setting the preset conditions for the weighting of the identification number, the tire belonging to host-vehicle can be quickly identified.

Preferably, in step T4, considering the maximum weighting of the identification number among all antennas as the comprehensive weighting of the identification number in the antenna group. In one embodiment, two antennas are included, namely antenna 1 and antenna 2. Referring to Table 1, the obtained identification number 1 ~ identification number 3 are all matched with the historical identification numbers or temporary identification numbers. After the weighting calculation in step T3, the weighting of identification number 1 in antenna 1 is 4, and the weighting in antenna 2 is 6. The weighting of identification number 2 in antenna 1 is 5, and the weighting in antenna 2 is 5. The weighting of identification number 3 in antenna 1 is 6, and the weighting in antenna 2 is 3. In step T4, if the largest weighting is taken as the comprehensive weighting, the comprehensive weighting of identification number 1 ~ identification number 3 are 6, 5, and 6 respectively.

**Table 1**

| identification number | the weighting in antenna 1 | the weighting in antenna 2 | the weighting in antenna 3 |
|---|---|---|---|
| identification number 1 | 4 | 6 | 6 |
| identification number 2 | 5 | 5 | 5 |
| identification number 3 | 6 | 3 | 6 |

Preferably, before step T4, obtaining a packet sequence number and/or a timestamp of each data packet received by each antenna, and in step S4, merging the packet sequence numbers and/or timestamps of the same identification number in all antennas, and the number of corresponding data packets after merging is multiplied by the first type weight increment or the second type weight increment corresponding to the identification number, and the calculation result is used as the comprehensive weighting of the identification number in the antenna group. In another embodiment, two antennas are included, namely antenna 1 and antenna 2. Referring to Table 2, the obtained identification number 1 ~ identification number 3 are all matched with the historical identification numbers or temporary identification numbers. The packet sequence numbers of the data packets sent by the tire condition detection device corresponding to identification number 1 are a1~ a6, the packet sequence numbers of the data packets sent by the tire condition detection device corresponding to identification number 2 are b1 ~ b6, and the packet sequence numbers of the data packets sent by the tire condition detection device corresponding to identification number 3 are c1 ~ c6. The packet sequence numbers corresponding to identification number 1 received at antenna 1 are a1, a4, a5, the packet sequence numbers corresponding to identification number 2 are b1, b2, b4, and the data packet corresponding to identification number 3 is not received at antenna 1. The packet sequence numbers corresponding to identification number 1 received at antenna 2 are a1, a2, a5, the packet sequence number corresponding to identification number 2 is b3, and the packet sequence numbers corresponding to identification number 3 are c1, c2, c3. In step T4, the packet sequence numbers are merged, and the data packets a1 and a5 corresponding to the identification number 1 are received by both antenna 1 and antenna 2, the merged packet sequence numbers are a1, a2, a4, a5, and the number of data packets received by the antenna group with identification number 1 is 4. Similarly, the packet sequence numbers of the identification number 2 after being merged by antenna 1 and antenna 2 are b1, b2, b3, b4, and the number of data packets received by the antenna group with identification number 2 is 4. The packet sequence numbers of identification number 3 after antenna 1 and antenna 2 are merged are c1, c2, and c3, so the number of data packets received by identification number 3 in the antenna group is 3. If the first type of weight increment and the second type of weight increment are both 5, the comprehensive weighting of identification number 1 is 4*5=20, the comprehensive weighting of identification number 2 is 4*5=20, and the comprehensive weighting of identification number 3 is 3*5=15. The comprehensive weightings of identification number 1 ~ identification number 3 in the antenna group are 20, 20, and 15.

**Table 2**

| Identify -cation number | Number of packets sent by the tire condition detection device | packet sequence number and/or a timestamp (antenna 1) | packet sequence number and/or a timestamp (antenna 2) | The number of packets received by antenna 1 | The number of packets received by antenna 2 | The number of packets after merging |
|---|---|---|---|---|---|---|
| Identify -cation number 1 | a1~a6 | a1, a4, a5 | a1, a2, a5 | 3 | 3 | 4 |
| Identify -cation number 2 | b1~b6 | b1, b2, b4 | b3 | 3 | 1 | 4 |
| Identify -cation number 3 | c1~c6 | / | c1, c2, c3 | 0 | 3 | 3 |

Two methods for calculating the comprehensive weighting are provided above. As an example but not a limitation, other methods may be used to calculate the comprehensive weighting, such as accumulating multiple antenna weightings.

Preferably, the historical identification number has a first basic weighting, and the temporary identification number has a second basic weighting, wherein the first basic weighting is not greater than the second basic weighting, determining the comprehensive weighting of the historical identification number based on the first basic weighting and the first type of weight increment; determining the comprehensive weighting of the temporary identification number based on the second basic weighting and the second type of weight increment.

Preferably, a vehicle includes a historical identification number list for storing historical identification numbers and a temporary identification number list for storing temporary identification numbers, the historical identification number list can be understood as a variable array containing all historical identification numbers, and the temporary identification number list can be understood as another variable array containing all temporary identification numbers, so as to facilitate corresponding processing of the identification numbers therein.
Identifying the identification number in step T1 comprising: each antenna in the antenna group receiving a data packet sent by a tire condition detection device of a vehicle and obtaining the identification number corresponding to the tire condition detection device in the data packet;
Judgement of the identification number in step T2 comprising: determining whether the identification number matches the historical identification number in the historical identification number list or the temporary identification number in the temporary identification number list, and if not, storing the identification number in the temporary identification number list;
Weighting calculation in step T3 comprising: calculating the weighting of the identification number in the antenna based on the antenna that receives the identification number, if the identification number is historical identification number, accumulating weighting of the identification number in sequence according to the first type of weight increment; if the identification number is a temporary identification number, accumulating the weighting of the identification number in sequence according to the second type of weight increment;

Comprehensive weighting calculation in T4 comprising: calculating the comprehensive weighting of the identification number in the antenna group based on the weighting of each antenna of the identification number in the historical identification number list and the temporary identification number list.

Identification of a tire of a host-vehicle in step T5 comprising: determining whether the comprehensive weighting of the identification number meets a preset condition, if not, returning to step T1, if yes, identifying the tire corresponding to the identification number that meets the preset condition belongs to host-vehicle.

Preferably, if only data packet sent by single tire condition detection device of the host-vehicle is received in step T1, then a preset condition is determining whether the comprehensive weighting is greater than a third set threshold value in step T5, if not, returning to step S1, if yes, identifying the tire corresponding to the identification number belongs to host-vehicle. Setting the third set threshold value as 10, if the comprehensive weighting of the identification number included in the data packet is greater than 10, the identification number is determined as belong to the host-vehicle.

If data packets sent by all the tire condition detection devices of the host-vehicle are received in step T1, then a preset condition is determining whether there are N2 comprehensive weighting among all the identification numbers whose weightings are greater than a forth set threshold value in step T5, if not, returning to step T1, if yes, identifying the tires corresponding to the N2 identification numbers belong to the host-vehicle, wherein N2 is the number of tires of the host-vehicle.

Taking a large vehicle as an example, N2 takes a value of 8, and setting the fourth set threshold value as 10. When the comprehensive weightings of 8 identification numbers among the historical identification numbers and temporary identification numbers are greater than 10, the tires corresponding to these 8 identification numbers belong to host-vehicle, and the current identification is terminated. If only 7 or fewer identification numbers meet the requirements, then returning to step T1, and repeating steps T1 to T5 until 8 identification numbers are found with weightings greater than 10.

Preferably, in step T5, if the tires corresponding to the N2 identification numbers are identified as belonging to host-vehicle, the N2 identification numbers are used to update the historical identification number list. Further, using the first basic weighting as the initial weighting of the N2 identification numbers, and clearing the temporary identification number list.

Preferably, the upper limit of the number of different historical identification numbers is set as N3, and the upper limit of the number of temporary identification numbers is N4, and the condition N4≥N2, and N3≥3*N2 or N3+N4 ≥ 3 *N2 should be satisfied. It is easy to understand that it can allocate a first buffer for the historical identification number, and the maximum number of different historical identification numbers allowed to be configured in the first buffer is N3; it can allocate a second buffer for the temporary identification number, and the second buffer allows the maximum number of different temporary identification numbers to be configured to N4. If there is no temporary identification number yet, when N2=4, the preferred solution is N3≥12. If N2=N4=4, the preferred solution is N2≥8. The newly added temporary identification number is placed in the blank area of the second buffer. If there is no blank area at present, using the new temporary identification number to replace the temporary identification number with the smallest comprehensive weighting in the second buffer.

Preferably, in step T5, sorting the comprehensive weightings of all historical identification numbers and temporary identification numbers from large to small, and taking the N1th identification number in the sequence to determine whether the comprehensive weighting of the identification number is greater than the third threshold value, if not, returning to step 1, if yes, it is determined that the tire condition detection devices corresponding to the 1st to N1th identification numbers belong to host-vehicle.

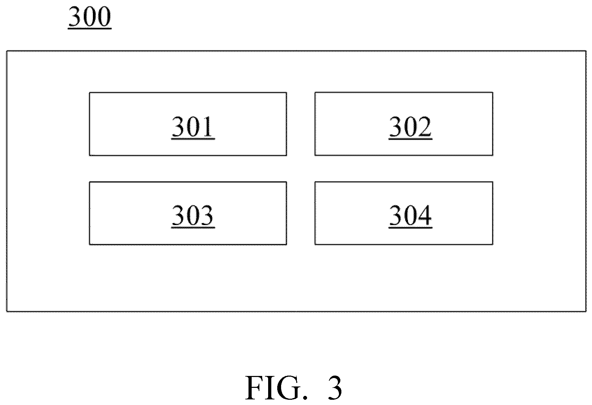

The present invention also provides a host-vehicle tire identification apparatus that is used to implement the host-vehicle tire identification method mentioned above, Fig. 3 shows a schematic diagram of a structure of a host-vehicle tire identification apparatus of a host-vehicle tire identification method according to an embodiment of the present invention. As shown in the figure, the host-vehicle tire identification apparatus comprises unit of identification of an identification number 301, unit of judgement of the identification number 302, unit of weighting calculation 303 and unit of identification 304.

Wherein, unit of identification of an identification number 301 is used to receive a data packet sent by a tire condition detection device of a vehicle and to obtain the identification number corresponding to the tire condition detection device in the data packet;
unit of judgement of the identification number 302 is used to determine whether the identification number is a historical identification number, the historical identification number representing the identification number of all tires of the host-vehicle that have been obtained during history process;
unit of weighting calculation 303 is used to calculate the weighting of the identification number based on the identification result of the determining identification number unit, if the identification number is historical identification number, accumulating weighting of the identification number in sequence according to a first type of weight increment; if the identification number is temporary identification number, accumulating weighting of the identification number in sequence according to a second type of weight increment, wherein the first type of weight increment is not less than the second type of weight increment;
unit of identification 304 is used to determine whether the weighting of the identification number meets a preset condition, if yes, identifying the tire corresponding to the identification number belongs to host-vehicle.

The present invention also provides a host-vehicle tire identification device, comprising a memory, a processor and a computer program stored in the memory and executable on the processor, the processor implements the steps of host-vehicle tire identification method based on an antenna as mentioned above when executing the computer program.

The present invention also provides a computer-readable storage medium having a computer program stored thereon, and when the computer program is executed by a processor, the steps of the host-vehicle tire identification method based on an antenna as mentioned above are implemented.

Among them, the specific implementation methods and technical effects of the identification apparatus, identification device and computer-readable storage medium can all be referred to the embodiments of the host-vehicle tire identification method provided by the above-mentioned present invention, and will not be repeated here.

Those skilled in the art will further appreciate that the various illustrative logic blocks, modules, circuits, and algorithm steps described in conjunction with the embodiments disclosed herein may be implemented as electronic hardware, computer software, or a combination of the two. To clearly illustrate this interchangeability of hardware and software, various illustrative components, blocks, modules, circuits, and steps are generally described above in terms of their functionality. Whether such functionality is implemented as hardware or software depends on the specific application and the design constraints imposed on the overall system. The technician may implement the described functionality in different ways for each specific application, but such implementation decisions should not be interpreted as resulting in a departure from the scope of the present invention.

The various illustrative logic modules and circuits described in conjunction with the embodiments disclosed herein may be implemented or executed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in an alternative, the processor may be any conventional processor, controller, microcontroller, or state machine. The processor may also be implemented as a combination of computing devices, such as a combination of a DSP and a microprocessor, a plurality of microprocessors, one or more microprocessors in cooperation with a DSP core, or any other such configuration.

The steps of the method or algorithm described in conjunction with the embodiments disclosed herein may be embodied directly in hardware, in a software module executed by a processor, or in a combination of the two. The software module may reside in a RAM memory, a flash memory, a ROM memory, an EPROM memory, an EEPROM memory, a register, a hard disk, a removable disk, a CD-ROM, or any other form of storage medium known in the art. An exemplary storage medium is coupled to a processor so that the processor can read and write information from/to the storage medium. In an alternative, a storage medium may be integrated into a processor. The processor and the storage medium may reside in an ASIC. The ASIC may reside in a user terminal. In an alternative, the processor and the storage medium may reside in a user terminal as discrete components.

In one or more exemplary embodiments, the functions described may be implemented in hardware, software, firmware, or any combination thereof. If implemented as a computer program product in software, each function may be stored on or transmitted by a computer-readable medium as one or more instructions or codes. Computer-readable media include both computer storage media and communication media, including any media that facilitates the transfer of a computer program from one place to another. Storage media may be any available media that can be accessed by a computer. As an example and not limitation, such a computer-readable medium may include RAM, ROM, EEPROM, CD-ROM or other optical disk storage, disk storage or other magnetic storage device, or any other medium that can be used to carry or store the desired program code in the form of an instruction or data structure and can be accessed by a computer. Any connection is also properly referred to as a computer-readable medium. For example, if the software is transmitted from a website, server, or other remote source using a coaxial cable, fiber optic cable, twisted pair, digital subscriber line (DSL), or wireless technologies such as infrared, radio, and microwaves, the coaxial cable, fiber optic cable, twisted pair, DSL, or wireless technologies such as infrared, radio, and microwaves are included in the definition of the medium. Disk and disc as used herein include compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It will be apparent to those skilled in the art that various modifications and variations may be made to the above exemplary embodiments of the present invention without departing from the spirit and scope of the present invention. Therefore, it is intended that the present invention covers modifications and variations of the present invention that fall within the scope of the appended claims and their equivalent technical solutions.

## Claims

1. A host-vehicle tire identification method, applicable to a vehicle, **characterized by** comprising steps:
S1: identification of an identification number, receiving a data packet sent by a tire condition detection device of the vehicle and obtaining the identification number corresponding to the tire condition detection device in the data packet;
S2: judgement of the identification number, determining whether the identification number is a historical identification number, the historical identification number representing identification numbers of all tires of the host-vehicle that have been obtained during history process, and if the identification number is not the historical identification number, determining the identification number as a temporary identification number;
S3: weighting calculation, if the identification number is the historical identification number, accumulating weighting of the identification number in sequence according to a first type of weight increment; if the identification number is the temporary identification number, accumulating weighting of the identification number in sequence according to a second type of weight increment, wherein the first type of weight increment is not less than the second type of weight increment;
S4: identification of a tire of the host-vehicle, determining whether the weighting of the identification number meets a preset condition, if not, returning to step S1, if yes, identifying the tire corresponding to the identification number that meets the preset condition belongs to the host-vehicle.

2. The host-vehicle tire identification method according to claim 1, **characterized in that**, the historical identification number has a first basic weighting, and the temporary identification number has a second basic weighting, wherein the first basic weighting is not greater than the second basic weighting;
weighting calculation in step S3 comprises: if the identification number is the historical identification number, the identification number taking the first basic weighting of the historical identification number as its initial weighting and accumulating weighting in sequence according to the first type of weight increment; if the identification number is the temporary identification number, the identification number taking the second basic weighting as its initial weighting and accumulating weighting in sequence according to the second type of weight increment.

3. The host-vehicle tire identification method according to claim 1, **characterized in that**, if only the data packet sent by single tire condition detection device of the vehicle is received in step S1, then the preset condition is determining whether the weighting of the identification number is greater than a first set threshold value in step S4, if not, returning to step S1, if yes, identifying the tire corresponding to the identification number belongs to the host-vehicle;
if the data packets sent by all tire condition detection devices of the vehicle are received in step **S1,** then the preset condition is determining whether there are N1 identification numbers among all the identification numbers whose weightings are greater than a second set threshold value in step S4, if not, returning to step **S1, if** yes, identifying the tires corresponding to the N1 identification numbers belong to the host-vehicle, wherein N1 is a number of tires of the host-vehicle.

4. The host-vehicle tire identification method according to claim **1, characterized in that**, the vehicle includes a historical identification number list for storing historical identification numbers and a temporary identification number list for storing temporary identification numbers;
identification of the identification number in step S1 comprises: receiving the data packet sent by tire condition detection device of the vehicle and obtaining the identification number corresponding to every tire condition detection device in the data packet;
judgement of the identification number in step S2 comprises: determining whether the identification number matches the historical identification number in the historical identification number list or the temporary identification number in the temporary identification number list, and if not, storing the identification number in the temporary identification number list;
weighting calculation in step S3 comprises: if the identification number is the historical identification number, accumulating weighting of the identification number in sequence according to the first type of weight increment; if the identification number is the temporary identification number, accumulating weighting of the identification number in sequence according to the second type of weight increment;
identification of a tire of the host-vehicle in step S4 comprises: determining whether the identification numbers in the historical identification number list and the temporary identification number list meet the preset condition, if not, returning to step **S1,** if yes, identifying that the tire corresponding to the identification number that meets the preset condition belongs to the host-vehicle.

5. An antenna-based host-vehicle tire identification method, applicable to a vehicle, the vehicle providing with an antenna group, and the antenna group including at least two antennas, **characterized in that** the identification method comprises steps:
T1, identification of the identification number, each antenna in the antenna group receiving the data packet sent by the tire condition detection device of the vehicle and obtaining the identification number corresponding to the tire condition detection device in the data packet;
T2, judgement of the identification number, determining whether the identification number is a historical identification number, the historical identification number representing identification numbers of all tires of the host-vehicle that have been obtained during history process, if the identification number is not the historical identification number, determining the identification number as a temporary identification number;
T3, weighting calculation, calculating the weighting of the identification number in the antenna based on the antenna that receives the identification number, if the identification number is the historical identification number, accumulating weighting of the identification number in sequence according to a first type of weight increment; if the identification number is the temporary identification number, accumulating weighting of the identification number in sequence according to a second type of weight increment, wherein the first type of weight increment is not less than the second type of weight increment;
T4, comprehensive weighting calculation, calculating a comprehensive weighting of the identification number in the antenna group based on the weighting of the identification number on each antenna;
T5, identification of a tire of the host-vehicle, determining whether the comprehensive weighting of the identification number meets a preset condition, if not, returning to step T1, if yes, identifying the tire corresponding to the identification number that meets the preset condition belongs to the host-vehicle.

6. The host-vehicle tire identification method according to claim 5, **characterized by** further comprising, in step T4, considering a maximum weighting of the identification number among all antennas as the comprehensive weighting of the identification number in the antenna group.

7. The host-vehicle tire identification method according to claim 5, **characterized by** further comprising, before step T4, obtaining a packet sequence number and/or a timestamp of each data packet received by each antenna, and in step S4, merging the packet sequence numbers and/or timestamps of the same identification number in all antennas, and the number of corresponding data packets after merging is multiplied by the first type weight increment or the second type weight increment corresponding to the identification number, and a calculation result is used as the comprehensive weighting of the identification number in the antenna group.

8. The host-vehicle tire identification method according to claim 5, **characterized in that**, the historical identification number has a first basic weighting, and the temporary identification number has a second basic weighting, wherein the first basic weighting is not greater than the second basic weighting, determining the comprehensive weighting of the historical identification number based on the first basic weighting and the first type of weight increment; determining the comprehensive weighting of the temporary identification number based on the second basic weighting and the second type of weight increment.

9. The host-vehicle tire identification method according to any one of claims 6 to 8, **characterized in that**, the vehicle includes the historical identification number list for storing historical identification numbers and the temporary identification number list for storing temporary identification numbers;
identification of the identification number in step T1 comprises: each antenna in the antenna group receiving the data packet sent by the tire condition detection device of the vehicle and obtaining the identification number corresponding to the tire condition detection device in the data packet;
judgement of the identification number in step T2 comprises: determining whether the identification number matches the historical identification number in the historical identification number list or the temporary identification number in the temporary identification number list, and if not, storing the identification number in the temporary identification number list;
weighting calculation in step T3 comprises: calculating the weighting of the identification number in the antenna based on the antenna that receives the identification number, if the identification number is the historical identification number, accumulating weighting of the identification number in sequence according to the first type of weight increment; if the identification number is the temporary identification number, accumulating weighting of the identification number in sequence according to the second type of weight increment;
comprehensive weighting calculation in T4 comprises: calculating the comprehensive weighting of the identification number in the antenna group based on the weighting of each antenna of the identification number in the historical identification number list and the temporary identification number list.
identification of a tire of the host-vehicle in step T5 comprises: determining whether the comprehensive weighting of the identification number meets a preset condition, if not, returning to step T1, if yes, identifying the tire corresponding to the identification number that meets the preset condition belongs to the host-vehicle.

10. The host-vehicle tire identification method according to any one of claims 5 to 8, **characterized in that**,
if only the data packet sent by single tire condition detection device of the vehicle is received in step T1, then the preset condition is determining whether the comprehensive weighting is greater than a third set threshold value in step T5, if not, returning to step **T1,** if yes, identifying the tire corresponding to the identification number belongs to the host-vehicle;
if the data packets sent by all the tire condition detection devices of the vehicle are received in step T1, then the preset condition is determining whether there are N2 comprehensive weighting among all the identification numbers whose weightings are greater than a forth set threshold value in step T5, if not, returning to step T1, if yes, identifying the tires corresponding to the N2 identification numbers belong to the host-vehicle, wherein N2 is the number of tires of the host-vehicle.

11. A host-vehicle tire identification apparatus, used to implement the host-vehicle tire identification method in claim **1, characterized by** comprising:
unit of identification of an identification number, which is used to receive the data packet sent by the tire condition detection device of a vehicle and obtaining the identification number corresponding to the tire condition detection device in the data packet;
unit of judgement of the identification number, which is used to determine whether the identification number is a historical identification number, the historical identification number representing identification numbers of all tires of the host-vehicle that have been obtained during history process;
unit of weighting calculation, which is used to calculate a weighting of the identification number based on the identification result of the unit of judgement of the identification number, if the identification number is the historical identification number, accumulating weighting of the identification number in sequence according to a first type of weight increment; if the identification number is a temporary identification number, accumulating weighting of the identification number in sequence according to a second type of weight increment, wherein the first type of weight increment is not less than the second type of weight increment;
unit of identification, which is used to determine whether the weighting of the identification number meets a preset condition, if yes, identifying the tire corresponding to the identification number belongs to the host-vehicle.

12. A host-vehicle tire identification device, comprising a memory, a processor and a computer program stored in the memory and executable on the processor, **characterized in that**, the processor implements the steps of host-vehicle tire identification method based on an antenna as claimed in any one of claims 1 to 4 when executing the computer program.

13. A computer-readable storage medium having a computer program stored thereon, **characterized in that**, when the computer program is executed by a processor, the steps of the host-vehicle tire identification method based on an antenna as claimed in any one of claims 1 to 4 are implemented.
